# EUROPÄISCHE PATENTSCHRIFT

(11) **EP 2 147 414 B1**
(45) Veröffentlichungstag und Bekanntmachung des Hinweises auf die Patenterteilung: **09.03.2011**
(21) Anmeldenummer: 08758058.5
(22) Anmeldetag: 08.05.2008
(51) Int. Cl.: G07C 3/00, G01D 11/24, G01M 1/00, G01M 13/04

(54) **MESSSTELLENKENNZEICHNUNG ZUR AUTOMATISCHEN MESSSTELLENERKENNUNG IN EINEM SYSTEM ZUR ZUSTANDSÜBERWACHUNG**
MEASURING POINT MARKING DEVICE FOR THE AUTOMATIC MEASURING POINT IDENTIFICATION IN A CONDITION MONITORING SYSTEM
IDENTIFICATION D'UN POINT DE MESURE POUR LA RECONNAISSANCE AUTOMATIQUE D'UN POINT DE MESURE DANS UN SYSTEME AUX FINS DE CONTROLE D'ETAT

(30) Priorität: 12.05.2007 DE 102007022355
(43) Veröffentlichungstag der Anmeldung: 27.01.2010
(73) Patentinhaber: Schaeffler Technologies GmbH & Co. KG, 91074 Herzogenaurach (DE)
(72) Erfinder: HAMERS, Luc, 52064 Aachen (DE); LANGER, Götz, 52159 Roetgen (DE); SCHUELLER, Diethelm, 52072 Aachen (DE)
(86) Internationale Anmeldenummer: PCT/DE2008/000802
(87) Internationale Veröffentlichungsnummer: WO 2008/138321

(56) Entgegenhaltungen:
- WO-A-98/01831
- DE-A1- 1 473 691
- DE-A1- 3 511 095
- DE-A1- 10 128 744
- DE-A1- 19 703 446
- JP-A- 2006 281 928

## Beschreibung

### Gebiet der Erfindung

Die Erfindung betrifft eine Einrichtung zur Kennzeichnung einer Messstelle zur automatischen Messstellenerkennung in einem System zur Zustandsüberwachung.

Maschinen mit sich bewegenden Teilen sind im Verlauf ihrer Nutzung Beanspruchungen ausgesetzt, die es oft mit sich bringen, dass sich der Betriebszustand dieser Maschinen verschlechtert. Es ist bekannt, den Betriebszustand solcher Maschinen in gewissen Abständen zu untersuchen. Der Betriebszustand kann beispielsweise durch Messen der Vibrationsamplitude in einem Lager bzw. durch Messen von Temperaturänderungen auf dem Gehäuse der Maschine bestimmt werden, wobei die Temperaturen abhängig vom Betriebszustand des Lagers sind. Zustandsprüfungen sind hinsichtlich der Sicherheit und der Betriebsdauer derartiger Maschinen von großer Bedeutung. Zur Ermittlung des Betriebszustands einer Maschine ist es zumeist erforderlich, den Zustand an einer Vielzahl von auf der Maschine verteilt angeordneten Messstellen mit einem mobilen Messsystem zu erfassen. Hierzu werden die einzelnen Messstellen temporär mit einem Sensor verbunden. Auf dem Messsystem ist die zur Messstelle gehörende Konfiguration, die fest an die Messposition gekoppelt ist, auszuwählen. Eine manuelle Auswahl der jeweils erforderlichen Konfiguration ist als fehleranfällig anzusehen, außerdem erhöht sich hierdurch der Arbeitsaufwand.

Für die Reproduzierbarkeit der Messergebnisse ist es außerdem erforderlich, den Sensor unter möglichst gleichen, optimalen Bedingungen und am gleichen Ort zu applizieren. Der Sensor kann zum Beispiel magnetisch oder mechanisch, beispielsweise über einen Bajonettverschluss, mit der Messstelle verbunden werden. Bei einer magnetischen Ankopplung sollte hierzu eine möglichst plane und saubere Oberfläche zur Verfügung stehen.

Aus dem Produktbtatt "Condition Monitoring -always a painful experience?" der Firma PRUFTECHNIK Ltd. ist es bekannt, Messstellen mit Identitätsdaten zu versehen, die automatisch durch ein getrenntes Lesegerät auslesbar sind. Hierzu wird bei einem vorbekannten Aufnehmersystem die Messstelle mit einem codierten Kunststoffring versehen. Das Aufnehmersystem wird an der Messstelle über einen Bajonettverschluss fest arretiert. Ein Codierring-Sensor tastet zunächst ein Ringmuster im Kunststoffring ab und erkennt daraus, um welche Messstelle es sich handelt. Daraufhin werden die zuvor für diese Messstelle programmierten Messungen durchgeführt. Mit dem vorbekannten Aufnehmersystem wird zwar eine automatische Messstellenerkennung realisiert, die bei diesem System verwendete mechanische Dekodierung der Messstelle ist jedoch naturgemäß relativ verschleißanfällig und unterliegt damit auch einem erhöhten Wartungsaufwand.

Zur Kennzeichnung von Objekten haben sich in den letzten Jahren, beispielsweise im Logistik und Vertriebsbereich, zunehmend RFID-Transponder durchgesetzt. Mittels RFID-Transpondern (Radio Frequency Identification) erfolgt ein drahtloser Austausch von Daten per Funk zwischen dem am Objekt angebrachten RFID-Transponder und einer davon entfernten Ausleseeinheit. Hierbei wird der RFID-Transponder, der einen Datenchip und eine Antenne umfasst, durch ein von der Ausleseeinheit gesendetes Funksignal dazu angeregt, ein Signal auszustrahlen, das die gespeicherten Daten enthält und wiederum von der Ausleseeinheit empfangen werden kann. Ein Vorteil bei dieser Art der Kennzeichnung besteht darin, dass zwischen Ausleseeinheit und RFID-Transponder kein Sichtkontakt bestehen muss.

Der DE 697 07 459 T2 kann ein System zur Zustandsbestimmung einer Maschine entnommen werden. Das System umfasst ein Analysegerät, eine mechanisch an eine Messstelle ankoppelbare Sensoreinheit und eine Einrichtung, die einen wieder beschreibbaren Informationsträger aufweist, der auf, an oder in der Nähe eines Messpunktes der Maschine platziert ist. Der Informationsträger enthält Informationen hinsichtlich der Identität des Messpunktes und der Auswerteinformation. Das Analysegerät kann den Zustandswert in dem beschreibbaren Informationsträger speichern, so dass der Zustandswert nachfolgend als ein Bezugszustandswert verwendet werden kann. Der Informationsaustausch zwischen Analyseeinheit und Informationsträger kann über Funk erfolgen. Das vorbekannte System ist relativ aufwändig, da jedem einzelnem Messpunkt ein separates Speichersystem mit Schreib-Lese- und Übertragungseinheit zugeordnet ist, was sich insbesondere bei einer großen Anzahl von Messpunkten als nachteilig erweisen kann.

Die Aufgabe der vorliegenden Erfindung besteht somit darin, eine Einrichtung zur Kennzeichnung einer Messstelle zur Verfügung zu stellen, die eine automatische Messstellenerkennung auf Basis von RFID-Transpondem sowie eine optimale Ankopplung eines Sensors ermöglicht. Die Einrichtung sollte mit relativ geringem Aufwand an einer Messstelle befestigt werden können. Außerdem sollte sie sich durch eine kompakte, robuste, wenig Bauraum erfordernde Bauweise auszeichnen und kostengünstig zu produzieren sein.

Zur Lösung der Aufgabe dient eine Messstellenkennzeichnung zur automatischen Messstellenerkennung in einem System zur Zustandsüberwachung gemäß dem beigefügten Anspruch 1.

Die erfindungsgemäße Messstellenkennzeichnung umfasst eine Platte, welche mit der Messstelle fest verbunden ist und eine Fläche zur magnetischen Ankopplung eines Sensors aufweist. Mit der Platte ist eine die Platte überdeckende Schutzkappe verbunden, in welche ein RFID-Transponder integriert ist, dex Informationen zur ldentifikation der Messstelle aufweist.

Ein Vorteil der Erfindung besteht darin, dass die zur Kennzeichnung dienende Einrichtung eine sehr kompakte und Platz sparende Bauweise besitzt. Durch die Verwendung einer Schutzkappe wird die Oberfläche der Platte vor Verunreinigungen geschützt. Auf diese Weise kann eine optimale Sensorankopplung sichergestellt werden.

Dadurch, dass der RFID-Transponder direkter Bestandteil der Schutzkappe ist, welche wiederum fest mit der Platte verbunden ist, lässt sich die Messstellenkennzeichnung mit relativ geringem Aufwand auf der Messstelle befestigen. Hierfür ist es lediglich erforderlich, die Platte mit der Messstelle zu verbinden. Eine Identifikation der Messstelle per Funk ist vorteilhaft, da die hierfür verwendeten Elemente während des Identifiziervorgangs keiner mechanischen Beanspruchung unterliegen und daher im Vergleich zu Lösungen, bei denen mechanische Dekodierverfahren genutzt werden, so gut wie keinem Verschleiß unterliegen.

Nach einer vorteilhaften Ausführungsform ist die Platte an die Messstelle geklebt. Über diese Art der Montage ist sichergestellt, dass keine Materialentnahme aus dem zu messenden Objekt stattfindet, die dieses schwächen könnte. In Fällen wo dies problemlos möglich ist, kann die Platte auch über ein mechanisches Befestigungselement mit der Messstelle verbunden werden.

Als mechanisches Befestigungselement kann beispielsweise eine Schraube dienen. Die Platte würde in diesem Fall eine entsprechende Durchgangsbohrung aufweisen.

Bei einer bevorzugten Ausführungsform besteht die Platte aus magnetischem Edelstahl. Edelstahl zeichnet sich durch eine gute Beständigkeit, auch bei rauen Umgebungsbedingungen aus.

Als zweckmäßig hat es sich erwiesen, wenn die Schutzkappe aus Kunststoff besteht. Derartige Schutzkappen lassen sich besonders einfach und kostengünstig fertigen.

Nach einer weiteren vorteilhaften Ausführungsform ist der RFID-Transponder in die Schutzkappe eingegossen. Auf diese Weise ist der RFID-Transponder zusätzlich vor schädlichen Umgebungseinflüssen geschützt. Alternativ dazu kann der RFID-Transponder auch an der Schutzkappe aufgeklebt werden. Bevorzugt kann ein Kleben des RFID-Transponders an der Innenseite der Schutzkappe vorgesehen sein, wodurch auch hier ein Schutz gewährleistet ist.

Weiterhin ist es zweckmäßig, wenn die Schutzkappe über eine Kappensicherung mit dem Randbereich der Platte verbunden ist. Durch diese Maßnahme ist sichergestellt, dass die Schutzkappe weder vertauscht werden noch verloren gehen kann. Dies ist wichtig, da jeder Messstelle ja genau eine Schutzkappe zugewiesen ist, welche über den darin enthaltenen RFID-Transponder eindeutig identifiziert werden kann.

Der RFID-Transponder weist Informationen zur Identifikation der Messstelle auf. Werden diese Informationen von einem entsprechenden Lesegerät, beispielsweise von einem RFID-Reader, erfasst, kann anhand dieser Informationen eine automatische Messstellenerkennung erfolgen und somit die für diese Messstelle erforderliche Konfiguration ausgewählt werden.

Bei einer weiteren bevorzugten Ausführungsform ist der Sensor zum Auslesen des RFID-Transponders ausgelegt, beispielsweise bei einem so genanntem "in den Sensor integrierten RFID-Reader". Der Sensor überträgt hier neben den Messdaten somit auch die zur Identifikation der Messstelle dienenden Daten an eine zentrale Auswerteeinheit. Dadurch, dass der Sensor selbst mit dieser Funktionalität versehen ist, entfällt die Notwendigkeit einer separaten Leseeinheit zum Erfassen der im RFID-Transponder enthaltenen ldentitätsinformation der Messstelle.

Weiterhin kann ein so genanntes mobiles Gerät, beispielsweise ein "Handheld" vorgesehen sein, in welchem die zentrale Auswerteeinheit integriert ist. Weiterhin kann in dieses mobile Gerät auch das Lesegerät zum Erfassen der RFID-Transponder-Informationen, beispielsweise der RFID-Reader, integriert sein. Über ein Kabel kann ferner der Sensor mit dem Handheld derart verbunden sein, dass die Sensordaten vom Sensor an die zentrale Auswerteeinheit übertragbar sind. In Ausführung des in den Sensor integrierten RFID-Reader ist (der) Sensor - über diesen der in diesen integrierte RFID-Reader - mit einem solchen Handheld verbunden, wobei dann hier eine Integration des RFID-Readers unmittelbar in das Handheld entfallen kann.

Schließlich hat es sich als günstig erwiesen, die Schutzkappe derart auszugestalten, dass ein Mindestabstand zwischen RFID-Transponder und Platte gewährleistet ist, um Störeinflüsse zu vermeiden. Der Mindestabstand muss dabei so gewählt werden, dass durch die aus einem metallischen Material bestehende Platte, kein erstzunehmender, negativer Einfluss auf die Funkverbindung zwischen RFID-Transponder und einer zum Auslesen des RFID-Transponders verwendeten Leseeinheit ausgeübt wird. Bekanntlich beeinträchtigen ja alle Arten von Metallen eine Funkverbindung und mindern deren Reichweite. Durch die Einhaltung eines Mindestabstandes sollen die Störeinflüsse gering gehalten werden.

Weiterhin kann vorgesehen sein, dass zur automatischen Messstellenerkennung und/oder Zustandsüberwachung, eine zum Auslesen des RFID-Transponders (05) verwendete Leseeinheit in ein mobiles Gerät, insbesondere ein Handheld, eingebaut ist, an welches der Sensor unter Verwendung eines Kabels angeschlossen ist, und unter Verwendung des Lesegerätes der RFID-Transponder, insbesondere zu einer Identifikation, ausgelesen und unter Verwendung des Sensors eine Messung an der Messstelle durchgeführt wird.

Auch kann vorgesehen sein, dass zur automatischen Messstellenerkennung und/oder Zustandsüberwachung, eine zum Auslesen des RFID-Transponders (05) verwendete Leseeinheit in den Sensor integriert ist, welcher Sensor unter Verwendung eines Kabels an einem mobilen Gerät, insbesondere an einem Handheld, angeschlossen ist, und unter Verwendung des Sensors mit integriertem Lesegerät der RFID-Transponder, insbesondere zu einer Identifikation, ausgelesen und eine Messung an der Messstelle durchgeführt wird.

Weitere Vorteile, Einzelheiten und Weiterbildungen der vorliegenden Erfindung ergeben sich aus der nachfolgenden Beschreibung einer bevorzugten Ausführungsform, unter Bezugnahme auf die Zeichnung. Es zeigt:

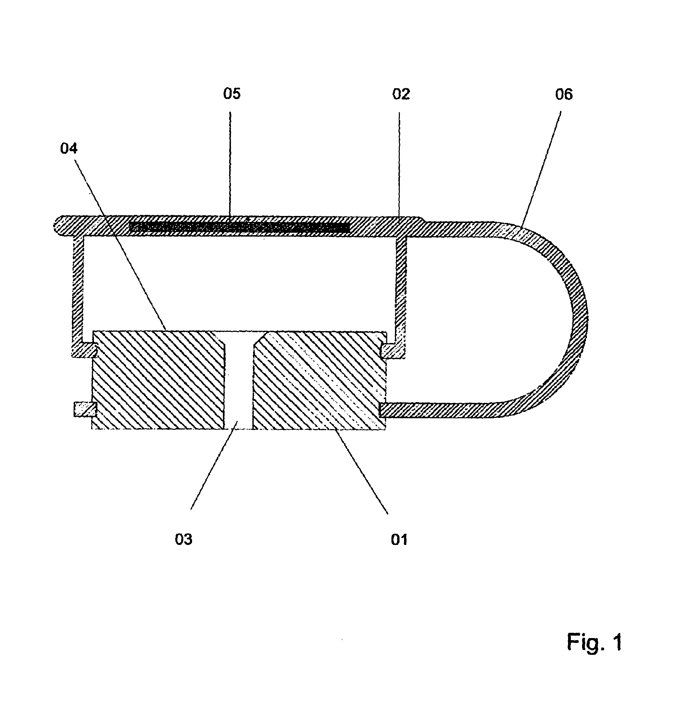

- Fig. 1: eine Schnittdarstellung einer erfindungsgemäßen Vorrichtung.

Fig. 1 zeigt eine vereinfachte Schnittdarstellung einer erfindungsgemäßen Messstellenkennzeichnung. Die Messstellenkennzeichnung dient zur Kennzeichnung einer Messstelle zur automatischen Messstellenerkennung in einem System zur Zustandsüberwachung. Die Messstellenkennzeichnung umfasst eine Platte 01 sowie eine mit der Platte 01 verbundene Schutzkappe 02. Die Schutzkappe 02 ist so ausgelegt, dass sie die Platte 01 im geschlossenen Zustand überdeckt. Auf diese Weise ist die Platte 01 vor Verunreinigungen geschützt. Die Platte 01 kann mit einer Messstelle an einer Maschine oder dergleichen (nicht gezeigt) fest verbunden werden. Die Verbindung kann beispielsweise über eine Klebeverbindung realisiert werden. Eine Klebeverbindung hat den Vorteil, dass keine Materialentnahme aus dem zu messenden Objekt erfolgen muss und daher eine Schwächung des Objekts vermieden werden kann. In den Fällen, wo eine Materialentnahme problemlos und ohne Schwächung des zu messenden Objekts erfolgen kann, ist auch eine Befestigung der Platte 01 über ein mechanisches Befestigungselement möglich. Als mechanisches Befestigungselement kann beispielsweise eine Schraube dienen. Hierzu ist die Platte 01 mit einer Durchgangsbohrung 03 versehen. Die Messstellenkennzeichnung ist also bereits so ausgelegt, dass beide Arten der Befestigung möglich sind und entsprechend den jeweiligen Gegebenheiten ausgewählt werden können.

Die Platte 01 besitzt eine Fläche 04, die so ausgestaltet ist, dass sie zur magnetischen Ankopplung eines Sensors geeignet ist. Im Zusammenhang mit einer problemlosen magnetischen Ankopplung ist eine möglichst plane Ausführung der zum Ankoppeln verwendeten Fläche 04 wichtig. Um eine magnetische Ankopplung überhaupt zu ermöglichen, ist es erforderlich, dass die Platte 01 selbst aus einem magnetischen Material besteht. Als besonders günstig hat sich die Verwendung von Edelstahl 17-4 erwiesen, welcher sich durch eine gute Beständigkeit, auch bei rauen Umgebungsbedingungen auszeichnet.

Die Schutzkappe 02 besteht vorzugsweise aus Kunststoff. Sie ist mit einem RFID-Transponder 05 versehen, welcher in die Schutzkappe 02 eingegossen ist. Dadurch, dass sich der RFID-Transponder 05 direkt in der Schutzkappe 02 befindet, ist er zusätzlich vor Verunreinigungen und Beschädigungen geschützt. Der RFID-Transponder 05 enthält Informationen zur Identifikation der Messstelle, welche über ein entsprechendes Lesegerät ausgelesen werden können. Die Schutzkappe 02 ist derart ausgeführt, dass ein Mindestabstand zwischen RFID-Transponder 05 und Platte 01 gewährleistet ist. Falls ein zu geringer Abstand zwischen RFID-Transponder und der aus Metall bestehenden Platte vorliegt, könnte es zur Beeinträchtigung der Funkverbindung zwischen RFtD-Transponder und dem zum Auslesen der ldentifikationsinformationen dienenden Lesegerät kommen.

Die Schutzkappe 02 ist über eine Kappensicherung 06 unlösbar oder zumindest schwer lösbar mit dem Randbereich der Platte 01 verbunden. Durch die Verwendung einer Kappensicherung 06 ist sichergestellt, dass die Schutzkappe 02 nicht verloren gehen kann oder mit einer anderen Schutzkappe 02, welche einer anderen Messstelle zugeordnet ist, vertauscht werden kann. Dies ist wichtig, da ja jede Schutzkappe 02 genau einer Messstelle zugewiesen ist, weil sie den für diese Messstelle zugehörigen RFID-Transponder enthält, der seinerseits die zur eindeutigen ldentifizierung der Messstelle benötigten Daten enthält.

Die Messung erfolgt nun folgendermaßen. Alle zu erfassenden Messstellen müssen zunächst für die Messung vorbereitet werden, indem sie mit der erfindungsgemäßen Einrichtung versehen werden. Hierzu wird die Platte 01 entweder auf die Messstelle geklebt oder über ein mechanisches Befestigungselement mit der Messstelle verbunden. Jede einzelne Messstelle wird anschließend temporär mit einem Sensor verbunden. Dazu wird zunächst die Schutzkappe 02 von der Platte 01 entfernt. Die Fläche 04 ist nun zugängüch und der Magnetfuß des Sensors kann angekoppelt werden. Im nächsten Schritt werden die im RFID-Transponder 05 enthaltenen Informationen ausgelesen. Dies kann zum einen direkt durch den Sensor erfolgen, wenn er mit einer entsprechenden Funktionalität ausgestattet ist. Es besteht jedoch auch die Möglichkeit die Daten über eine separate Leseeinheit zu erfassen. Die zur Identifikation der aktuellen Messstelle dienenden Daten und die vom Sensor gemessen Werte können zur Weiterverarbeitung an eine zentrale Informationsverarbeitungseinheit übermittelt werden.

### Bezugszeichenliste

- 01: Platte
- 02: Schutzkappe
- 03: Durchgangsbohrung
- 04: Fläche zur Ankopplung eines Sensormagnetfußes
- 05: RFID-Transponder
- 06: Kappensicherung

## Patentansprüche

1. Messstellenkennzeichnung zur automatischen Messstellenerkennung in einem System zur Zustandsübennrachung, **dadurch gekennzeichnet, dass** sie eine Platte (01) umfasst, welche mit der Messstelle fest verbindbar ist und welche eine Fläche (04) zur magnetischen Ankopplung eines Sensors aufweist, dass sie weiterhin eine Schutzkappe (02) umfasst, welche in einer die Platte (01) überdeckenden Position positionierbar ist, und dass die Schutzkappe (02) einen RFID-Transponder (05) aufweist, und dass im RFID-Transponder (05) Daten zur Identifikation der Messstelle gespeichert sind.

2. Messstellenkennzeichnung nach Anspruch 1, **dadurch gekennzeichnet, dass** die Platte (01) eine der Fläche (04) zur magnetischen Ankopplung gegenüberliegende Klebefläche aufweist, mit welcher sie an die Messstelle anklebbar ist.

3. Messstellenkennzeichnung nach Anspruch 1, **dadurch gekennzeichnet, dass** die Platte (01) über ein mechanisches Befestigungselement mit der Messstelle verbindbar ist.

4. Messstellenkennzeichnung nach Anspruch 3, **dadurch gekennzeichnet, dass** das mechanische Befestigungselement eine Schraube ist, welche durch eine in der Platte (01) angeordnete Durchgangsbohrung (03) geführt ist.

5. Messstellenkennzeichnung nach einem der Ansprüche 1 bis 4, **dadurch gekennzeichnet, dass** die Platte (01) aus magnetischem Edelstahl besteht.

6. Messstellenkennzeichnung nach einem der Ansprüche 1 bis 5, **dadurch gekennzeichnet, dass** die Schutzkappe (02) aus Kunststoff besteht.

7. Messstellenkennzeichnung nach Anspruch 6, **dadurch gekennzeichnet, dass** der RFID-Transponder (05) in die Schutzkappe (02) eingegossen ist oder an der Schutzkappe angeklebt, insbesondere an einer Innenseite der Schutzkappe angeklebt, ist.

8. Messstellenkennzeichnung nach einem der Ansprüche 1 bis 7, **dadurch gekennzeichnet, dass** die Schutzkappe (02) über eine Kappensicherung (06) mit dem Randbereich der Platte (01) verbunden ist.

9. Messstellenkennzeichnung nach Anspruch 8, **dadurch gekennzeichnet, dass** die Kappensicherung (06) einstückig mit der Schutzkappe (02) ausgebildet ist.

10. Messstellenkennzeichnung nach einem der Ansprüche 1 bis 9, **dadurch gekennzeichnet, dass** die Schutzkappe (02) derart ausgestaltet ist, dass ein vorgegebener Abstand zwischen RFID-Transponder (05) und Platte (01) gewährleistet ist, wenn die Schutzkappe (02) auf der Platte (01) aufgesetzt ist, um eine Beeinträchtigung der Funkverbindung zwischen RFID-Transponder (05) und einer zum Auslesen des RFID-Transponders (05) verwendeten Leseeinheit zu vermeiden.

11. Verwendung der Messstettenkennzeichnung nach einem der Ansprüche 1 bis 10, eingesetzt zur automatischen Messstellenerkennung und/oder Zustandsüberwachung, wobei eine zum Auslesen des RFID-Transponders (05) verwendete Leseeinheit in ein mobiles Gerät, insbesondere ein Handheld, eingebaut ist, an welches der Sensor unter Verwendung eines Kabels angeschlossen ist, und unter Verwendung des Lesegerätes der RFID-Transponder, insbesondere zu einer Identifikation, ausgelesen und unter Verwendung des Sensors eine Messung an der Messstelle durchgeführt wird.

12. Verwendung der Messstellenkennzeichnung nach einem der Ansprüche 1 bis 10, eingesetzt zur automatischen Messstellenerkennung und/oder Zustandsüberwachung, wobei eine zum Auslesen des RFID-Transponders (05) verwendete Leseeinheit in den Sensor integriert ist, welcher Sensor unter Verwendung eines Kabels an einem mobilen Gerät, insbesondere an einem Handheld, angeschlossen ist, und unter Verwendung des Sensors mit integriertem Lesegerät der RFID-Transponder, insbesondere zu einer Identifikation, ausgelesen und eine Messung an der Messstelle durchgeführt wird.

## Claims

1. Measuring point marking device for the automatic measuring point identification in a condition monitoring system, **characterized in that** said measuring point marking device comprises a plate (01) which can be permanently connected to the measuring point and which has a surface (04) for magnetically coupling a sensor, **in that** it also comprises a protective cap (02) which can be positioned in a position which covers the plate (01), and **in that** the protective cap (02) has an RFID transponder (05), and **in that** data relating to the identification of the measuring point are stored in the RFID transponder (05).

2. Measuring point marking device according to Claim 1, **characterized in that** the plate (01) has an adhesive surface which lies opposite the surface (04) for magnetic coupling and with which it can be adhesively bonded to the measuring point.

3. Measuring point marking device according to Claim 1, **characterized in that** the plate (01) can be connected to the measuring point via a mechanical attachment element.

4. Measuring point marking device according to Claim 3, **characterized in that** the mechanical attachment element is a screw which is guided through a throughbore (03) which is arranged in the plate (01).

5. Measuring point marking device according to one of Claims 1 to 4, **characterized in that** the plate (01) is composed of magnetic stainless steel.

6. Measuring point marking device according to one of Claims 1 to 5, **characterized in that** the protective cap (02) is composed of plastic.

7. Measuring point marking device according to Claim 6, **characterized in that** the RFID transponder (05) is cast into the protective cap (02) or is bonded onto the protective cap, in particular is bonded onto an inner side of the protective cap.

8. Measuring point marking device according to one of Claims 1 to 7, **characterized in that** the protective cap (02) is connected to the edge region of the plate (01) via a cap securing means (06).

9. Measuring point marking device according to Claim 8, **characterized in that** the cap securing means (06) is embodied in one piece with the protective cap (02).

10. Measuring point marking device according to one of Claims 1 to 9, **characterized in that** the protective cap (02) is configured in such a way that a predefined distance between the RFID transponder (05) and the plate (01) is ensured when the protective cap (02) is fitted onto the plate (01) in order to avoid adversely affecting the radio connection between the RFID transponder (05) and a reading unit which is used to read out the RFID transponder (05).

11. Use of the measuring point marking device according to one of Claims 1 to 10, used for automatic measuring point identification and/or condition monitoring, wherein a reading unit which is used to read out the RFID transponder (05) is installed in a mobile device, in particular a handheld device, to which the sensor is connected using a cable, and the RFID transponder is read out, in particular for the purpose of identification, using the reading device, and a measurement is carried out at the measurement point using the sensor.

12. Use of the measuring point marking device according to one of Claims 1 to 10, used for automatic measuring point identification and/or condition monitoring, wherein a reading unit which is used to read out the RFID transponder (05) is integrated into the sensor, which sensor is connected to a mobile device, in particular to a handheld, using a cable, and the RFID transponder is read out, in particular for the purpose of identification, using the sensor with integrated reading device, and a measurement is carried out at the measuring point.

## Revendications

1. Identifiant de point de mesure pour la détection automatique d'un point de mesure dans un système de surveillance d'état, **caractérisé en ce qu'**il comprend une plaque (01) qui peut être reliée à demeure avec le point de mesure et qui présente une surface (04) pour le couplage magnétique d'un capteur, qu'il comprend en outre un capot de protection (02) qui peut être positionné dans une position qui recouvre la plaque (01) et que le capot de protection (02) présente un transpondeur RFID (05) et que des données d'identification du point de mesure sont enregistrés dans le transpondeur RFID (05).

2. Identifiant de point de mesure selon la revendication 1, **caractérisé en ce que** la plaque (01) présente une surface adhésive opposée à la surface (04) de couplage magnétique avec laquelle elle peut être collée au point de mesure.

3. Identifiant de point de mesure selon la revendication 1, **caractérisé en ce que** la plaque (01) peut être reliée avec le point de mesure par le biais d'un élément de fixation mécanique.

4. Identifiant de point de mesure selon la revendication 3, **caractérisé en ce que** l'élément de fixation mécanique est une vis qui est passée à travers un orifice traversant (03) présent dans la plaque (01).

5. Identifiant de point de mesure selon l'une des revendications 1 à 4, **caractérisé en ce que** la plaque (01) se compose d'acier inoxydable magnétique.

6. Identifiant de point de mesure selon l'une des revendications 1 à 5, **caractérisé en ce que** le capot de protection (02) se compose de matière plastique.

7. Identifiant de point de mesure selon la revendication 6, **caractérisé en ce que** le transpondeur RFID (05) est moulé dans le capot de protection (02) ou est collé sur le capot de protection, notamment collé sur un côté intérieur du capot de protection.

8. Identifiant de point de mesure selon l'une des revendications 1 à 7, **caractérisé en ce que** le capot de protection (02) est relié avec la zone de bordure de la plaque (01) par le biais d'une calotte de blocage (06).

9. Identifiant de point de mesure selon la revendication 8, **caractérisé en ce que** la calotte de blocage (06) est réalisée d'une seule pièce avec le capot de protection (02).

10. Identifiant de point de mesure selon l'une des revendications 1 à 9, **caractérisé en ce que** le capot de protection (02) est configuré de telle sorte qu'un écart prédéfini est garanti entre le transpondeur RFID (05) et la plaque (01) lorsque le capot de protection (02) est monté sur la plaque (01) afin d'éviter une perturbation de la liaison radioélectrique entre le transpondeur RFID (05) et une unité de lecture utilisée pour la lecture du transpondeur RFID (05).

11. Application de l'identifiant de point de mesure selon l'une des revendications 1 à 10, utilisé pour la détection automatique d'un point de mesure et/ou la surveillance d'état, une unité de lecture utilisée pour la lecture du transpondeur RFID (05) étant intégrée dans un appareil mobile, notamment tenu en main, auquel le capteur est raccordé en utilisant un câble, et le transpondeur RFID étant lu en utilisant le lecteur, notamment en vue d'une identification, et une mesure étant réalisée au point de mesure en utilisant le capteur.

12. Application de l'identifiant de point de mesure selon l'une des revendications 1 à 10, utilisé pour la détection automatique d'un point de mesure et/ou la surveillance d'état, une unité de lecture utilisée pour la lecture du transpondeur RFID (05) étant intégrée dans le capteur, lequel capteur étant raccordé en utilisant un câble à un appareil mobile, notamment tenu en main, et le transpondeur RFID étant lu en utilisant le capteur avec lecteur intégré, notamment en vue d'une identification, et une mesure étant réalisée au point de mesure.
